# EUROPEAN PATENT APPLICATION

(11) **EP 4 265 993 A1**
(43) Date of publication of application: **25.10.2023**
(21) Application number: 21907175.0
(22) Date of filing: 17.12.2021
(51) Int. Cl.: F27B 17/00, F27D 99/00, F27D 19/00

(54) **VERTICAL TYPE APPARATUS FOR FIRING CATHODE MATERIAL OF SECONDARY BATTERY**

(30) Priority: 18.12.2020 KR 20200178976
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR); POSCO Chemical Co., Ltd, Gyeongsangbuk-do 37918 (KR)
(72) Inventor: YANG, Choongmo, Pohang-si, Gyeongsangbuk-do 37673 (KR); LEE, Yong Hyun, Daejeon 34049 (KR); MOON, Jongyun, Daejeon 35215 (KR); DO, Byoung Mu, Pohang-si, Gyeongsangbuk-do 37669 (KR); KIM, Yeong Woo, Pohang-si, Gyeongsangbuk-do 37650 (KR); SONG, Sang Keun, Pohang-si, Gyeongsangbuk-do 37651 (KR); HWANG, Soon Cheol, Pohang-si, Gyeongsangbuk-do 37671 (KR); HEO, Jeong Heon, Pohang-si, Gyeongsangbuk-do 37664 (KR); MOON, Ji Woong, Pohang-si, Gyeongsangbuk-do 37673 (KR); KIM, Woo Taek, Pohang-si, Gyeongsangbuk-do 37680 (KR); KIM, Hyeon Woo, Pohang-si, Gyeongsangbuk-do 37835 (KR); JUNG, Keeyoung, Pohang-si, Gyeongsangbuk-do 37673 (KR); PARK, Yooncheol, Pohang-si, Gyeongsangbuk-do 37673 (KR); HWANG, Min Young, Pohang-si, Gyeongsangbuk-do 37560 (KR)
(74) Representative: Potter Clarkson
(86) International application number: PCT/KR2021/019334
(87) International publication number: WO 2022/131871

(57) **Abstract**

A vertical type apparatus for firing a cathode material of a secondary battery is provided. The vertical type apparatus for firing the cathode material according to the present disclosure includes a plurality of saggers, each having an open upper portion, provided with a through-slit for gas flow in a lower surface thereof, and loaded with the cathode material therein, and a plurality of unit firing furnaces, each having an open upper portion, each plurally stacked in the vertical direction, each receiving the respective sagger.

## Description

### [Technical Field]

The present disclosure relates to a vertical type apparatus for firing a cathode material of a secondary battery.

### [Background Art]

Recently, the Roller Hearth Kiln (hereinafter referred to as "RHK") method is preferred for a firing process of cathode materials based on a temperature precision and internal gas atmosphere control performance, which is suitable for small batch production of various products under various operating conditions.

A manufacturing process of cathode active materials using this RHK method is to fire a sagger containing a raw material powder in a firing furnace at a set temperature according to the characteristics of a raw material.

The firing process for manufacturing cathodes for lithium secondary batteries produces water vapor, carbon dioxide, etc., and carbon dioxide, in particular, is difficult to release into the outside because the molecular weight of carbon dioxide is larger than that of oxygen or air used to regulate an atmosphere in the firing furnace.

As described above, the carbon dioxide remaining in the sagger undergoes a chemical reaction with the lithium oxide on the surface of the cathode active material during a temperature lowering process to produce lithium carbonate, and this residual lithium carbonate may cause a slurry to become less dispersible during a cathode active material coating process or reduce the capacity of a battery when eventually manufactured into the battery.

Therefore, reducing the amount of residual lithium carbonate by facilitating the release of carbon dioxide from the firing process is an important factor in improving the final battery properties.

For this reason, in the firing furnace of cathode material for lithium-ion secondary batteries, a side air supply is utilized in addition to a lower or upper air supply in the firing furnace to effectively exhaust gases (CO₂ or H₂O) generated during the firing process.

In particular, when the saggers pass through the firing furnace in a multilayer stacked state, the carbon dioxide (CO2) gas generated at the bottom of the saggers is not sufficiently exhausted and stagnates in the middle of the saggers, which serves to increase the partial pressure of CO2, resulting in an increase in the amount of residual lithium carbonate in the final product.

As a method to prevent this, in addition to supplying air to the lower or upper portions of the firing furnace, a method is also used to supply air to a portion between the saggers from the side to force out or diffuse the stagnant carbon dioxide.

However, in the conventional RHK, the flow through the interior of the firing furnace is more likely to flow into an empty space around the saggers rather than into the interior of the saggers to supply the reactant gas (O₂) that the cathode material needs during the firing process or to exhaust the gas (H₂O or CO₂) produced by the firing reaction to the outside.

This empty space is inevitably created not only by the rollers for moving the saggers, but also by the heater structure installed on upper and lower portions of the firing furnace to fully utilize a radiant heat transfer to the saggers.

In contrast, in the firing furnace, for temperature control, partition walls are installed at predetermined intervals in the temperature increasing and cooling sections to distinguish zones, and in this case, the flow passes through a smaller cross-sectional area than the internal cross-sectional area of the firing furnace, resulting in a larger proportion of the cross-sectional area of the side windows of the saggers, and consequently, more flows into the saggers to promote the firing reaction.

However, in reality, in temperature maintenance sections where the gas concentration of the interior of the saggers is important for the firing reaction, the partition walls are usually not installed for thermal efficiency, resulting in a very low flow rate contributing to the firing reaction relative to the supply air flow rate, which increases the amount of gas supply and the energy cost to heat the gas.

### [Disclosure]

### [Technical Problem]

The present disclosure has been made in an effort to provide a vertical type apparatus for firing a cathode material of a secondary battery, which may solve a problem of structural stability that occurs in a high-stack sagger, and a problem of gas loss supplied to the interior of the firing furnace.

The present disclosure has been made in an effort to provide a vertical type apparatus for firing a cathode material of a secondary battery, in which one unit firing furnace is configured for one sagger, and the unit firing furnace is plurally stacked in a vertical direction with the sagger and the cathode material included inside the unit firing furnace, and then the unit firing furnace itself is capable of repeating temperature increasing-temperature maintaining-cooling-transferring while being transferred from an upper portion to a lower portion (or from a lower portion to an upper portion).

### [Technical Solution]

The vertical type apparatus for firing the cathode material of the secondary battery, according to one embodiment of the present disclosure, may include a plurality of saggers, each having an open upper portion, provided with a through-slit for gas flow in a lower surface thereof, and loaded with the cathode material therein.

The vertical type apparatus for firing the cathode material may include a plurality of unit firing furnaces, each having an open upper portion, each plurally stacked in the vertical direction, each receiving the respective sagger, and configured to move in a direction opposite to the gas flow.

The unit firing furnace may include: a main body made of a refractory material, provided with an opening for the gas flow on a lower surface thereof and having a receiving space in which each of the saggers is received; and a heater installed on one surface of the main body or inside thereof and configured to heat the sagger.

A heat insulator may be installed on an outer surface of the main body to retain heat generated by the heater.

A case may be installed on an outer surface of the heat insulator to cover the outer surface of the heat insulator.

A support structure may be installed on an outer surface of the case to support the main body and the heat insulator.

A sealant may be installed on an upper end surface of the case to prevent gas leakage between the unit firing furnace and other neighboring unit firing furnaces.

A temperature sensor configured to measure an internal temperature of the main body and a transmission device configured to transmit a measurement value measured by the temperature sensor to the outside, may be installed in the main body.

A lower stopper structure may be installed on an outer side of the unit firing furnace and configured to support the unit firing furnace located at an upper end of a lowermost unit firing furnace of the plurality of unit firing furnaces.

A lower support structure may be installed in a lower portion of the lowermost unit firing furnace of the plurality of unit firing furnaces and configured to support an entire lower portion of the plurality of unit firing furnaces.

A gas exhaust structure may be installed in an upper portion of an uppermost unit firing furnace of the plurality of unit firing furnaces and configured to capture an exhaust gas and discharge the exhaust gas to the outside.

A gas supply structure may be installed in a lower portion of the lowermost unit firing furnace of the plurality of unit firing furnaces and configured to supply gas.

The cathode material to be fired may be charged to the sagger received in the uppermost unit firing furnace of the plurality of unit firing furnaces, and
the cathode material after firing may be discharged from the sagger received in the lowermost unit firing furnace of the plurality of unit firing furnaces.

The vertical type apparatus for firing the cathode material may include a cathode material collecting and charging device configured to collect the cathode material after firing loaded into the sagger inside the lowermost unit firing furnace of the plurality of unit firing furnaces, and to charge the cathode material to be newly fired.

A catching projection may be provided at a bottom surface of the main body, and in which the sagger may be received and rested on the catching projection.

A catching groove may be disposed in an upper end of the main body, and a catching protrusion may be disposed on an outer side of an upper end of the sagger and configured to be caught in the catching groove.

### [Advantageous Effects]

According to an implemented embodiment of the present disclosure, the temperature profile and gas atmosphere required for firing may be more efficiently formed by charging and discharging the cathode material in the vertical direction, and by supplying gas in a direction opposite to the direction in which the cathode material is moving.

Therefore, not only can gas usage be dramatically reduced compared to the same amount of cathode material fired, but the firing reaction can be carried out more effectively, thus overcoming the production increase limitations of RHK (temperature, supply and exhaust air) and securing price competitiveness through innovative firing productivity improvements (assuming that quality is secured, including residual lithium control).

In particular, the firing reaction can proceed smoothly by supplying sufficient gas to the cathode material inside the sagger and sufficiently discharging the reaction gas generated during the firing reaction.

In case of the vertical type firing furnace of the present disclosure, most of the gas that has been passed through the slit on the bottom of the sagger and introduced into the sagger passes around the cathode material and participates in the firing reaction, and the reaction gas generated from the cathode material can be sufficiently discharged, thus there is no need for the sagger window. As a result, much more cathode material can be charged compared to the RHK, which is effective in increasing the production capacity.

In case of the vertical type firing furnace of the present disclosure, the sagger and the cathode material are directly heated by the heater inside the unit firing furnace surrounding the sagger, so that the power cost can be reduced by reducing the unnecessary refractory material and heat insulator.

In addition, the amount of gas supplied to the vertical type firing furnace of the present disclosure is reduced, and thus the electricity cost to heat the gas is also reduced, which contributes to the overall reduction in electricity cost.

### [Description of the Drawings]

FIG. 1 is a partial schematic perspective view of a unit firing furnace of a vertical type apparatus for firing cathode material of a secondary battery according to an embodiment of the present disclosure.
FIG. 2 is a schematic partial cross-sectional view of the unit firing furnace of the vertical type apparatus for firing the cathode material of the secondary battery, according to an embodiment of the present disclosure.
FIG. 3 is a schematic partial cross-sectional view illustrating a stacked structure of the unit firing furnace of the vertical type apparatus for firing the cathode material of the secondary battery according to an embodiment of the present disclosure.
FIG. 4 is a schematic partial cross-sectional view for describing an internal gas passage state of the unit firing furnace of the vertical type apparatus for firing the cathode material of the secondary battery according to an embodiment of the present disclosure.
FIG. 5 is a schematic cross-sectional view for describing an operation process of the vertical type apparatus for firing the cathode material of the secondary battery according to an embodiment of the present disclosure, in which FIG. 5A is an operation state, FIG. 5B is a moving state of a lower support structure, FIG. 5C is a collecting and charging state of the cathode material, FIG. 5D is a moving state of an upper gas exhaust structure and a lower portion structure, and FIG. 5E is a returning state to the operation state.
FIG. 6 illustrates a fixed form of the unit firing furnace and the sagger of the vertical type apparatus for firing the cathode material of the secondary battery according to an embodiment of the present disclosure, in which FIG. 6A is a case in which a catching projection is installed on the unit firing furnace, and FIG. 6B is a case in which a catching groove is disposed on the unit firing furnace and a catching protrusion is disposed on the sagger.

### [Mode for Invention]

Hereinafter, exemplary embodiments of the present disclosure will be described with reference to the accompanying drawings so that those with ordinary skill in the art to which the present disclosure pertains may easily carry out the exemplary embodiments.

As may be easily understood by those of ordinary skill in the art to which the present disclosure belongs, the embodiments described herein may be modified in various forms without departing from the concept and scope of the present disclosure.

Wherever possible, identical or similar parts are denoted by the same reference numerals in the drawings.

The technical terms used below are merely for the purpose of describing a specific exemplary embodiment, and not intended to limit the present disclosure.

Singular expressions used herein include plural expressions unless they have definitely opposite meanings. The terms "comprises" and/or "comprising" used in the specification specify particular features, regions, integers, steps, operations, elements, and/or components, but do not exclude the presence or addition of other particular features, regions integers, steps, operations, elements, components, and/or groups thereof.

All terms used below including technical or scientific terms have the same meanings as meanings which are generally understood by those skilled in the art. It shall be additionally construed that terms, which are defined in dictionaries, have meanings matching the related art document and currently disclosed contents, and the terms shall not be construed as ideal or excessively formal meanings unless clearly defined in the present application.

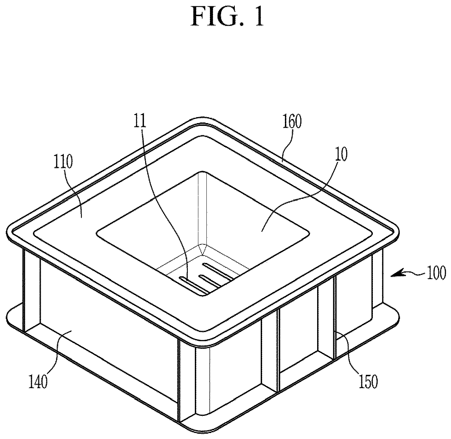

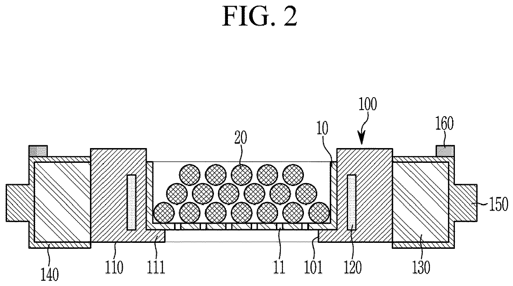

FIG. 1 is a partial schematic perspective view of a unit firing furnace of a vertical type apparatus for firing cathode material of a secondary battery according to an embodiment of the present disclosure, and FIG. 2 is a schematic partial cross-sectional view of the unit firing furnace of the vertical type apparatus for firing the cathode material of the secondary battery, according to an embodiment of the present disclosure.

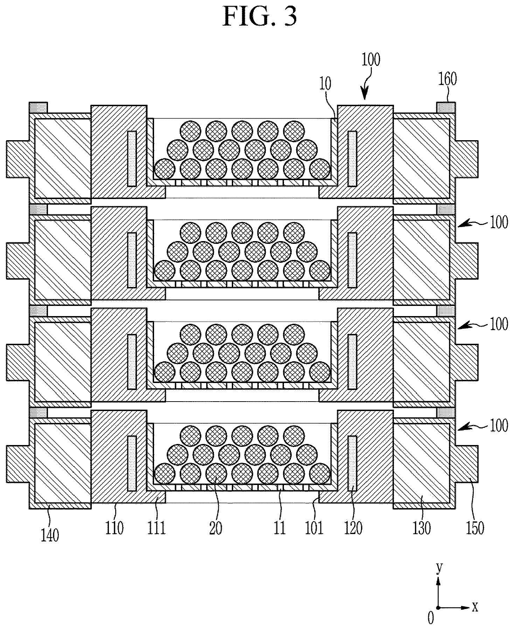

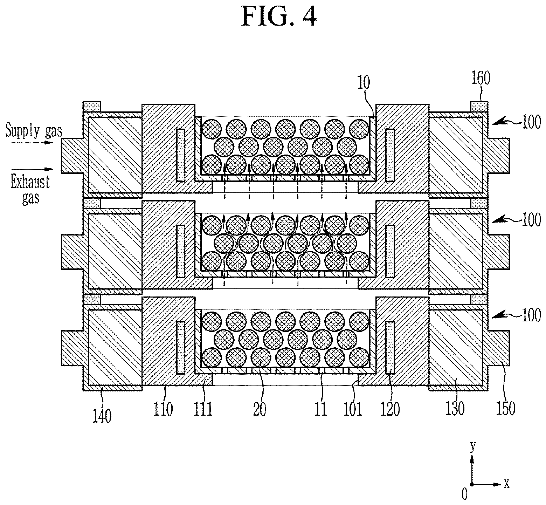

FIG. 3 is a schematic partial cross-sectional view illustrating a stacked structure of the unit firing furnace of the vertical type apparatus for firing the cathode material of the secondary battery according to an embodiment of the present disclosure, and FIG. 4 is a schematic partial cross-sectional view for describing an internal gas passage state of the unit firing furnace of the vertical type apparatus for firing the cathode material of the secondary battery according to an embodiment of the present disclosure.

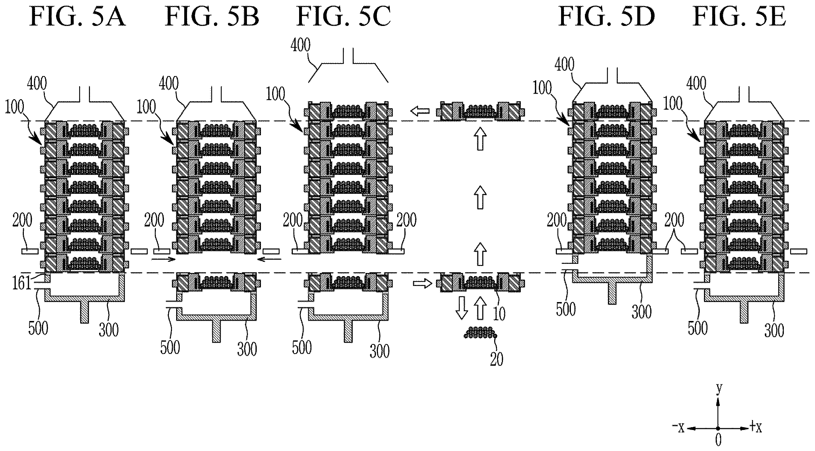

FIG. 5 is a schematic cross-sectional view for describing an operation process of the vertical type apparatus for firing the cathode material of the secondary battery according to an embodiment of the present disclosure.

With reference to FIGS. 1 to 5, the vertical type apparatus for firing the cathode material of the secondary battery according to an embodiment of the present disclosure includes one unit firing furnace 100 for each sagger 10 on which a cathode material 20 is loaded, in the vertical type apparatus for firing the cathode material of the secondary battery that transfers the cathode material 20 in a vertical direction and fires the cathode material 20.

Then, after a plurality of unit firing furnaces 100 are stacked in the vertical direction with the sagger 10 and the cathode material 20 stored therein, each unit firing furnace 10 itself moves from an upper portion to a lower portion or from the lower portion to the upper portion, and repeats the process of increasing temperature, maintaining temperature, cooling, and moving to fire the cathode material 20.

The unit firing furnace 100 may be loaded into the upper portion, transferred to the lower portion, and discharged to the lower portion, or loaded into the lower portion, transferred to the upper portion, and discharged to the upper portion.

The vertical type apparatus for firing the cathode material of the secondary battery may include a plurality of saggers 10 and a plurality of unit firing furnaces 100.

The plurality of saggers 10 each have an open upper portion and are provided with a through-slit 11 for gas flow on a lower surface thereof, and may be loaded with the cathode material 20 therein.

In addition, the plurality of unit firing furnaces 100 each have an open upper portion and are plurally stacked in the vertical direction (y-direction in FIG. 3), and each sagger 10 is received therein and may be transferred in a direction opposite to the gas flow.

The unit firing furnace 100 may include a main body 110, made of refractory material or the like, having an opening 101 for gas flow in a center portion of a lower surface thereof and having a receiving space for receiving each sagger 10, and a heater 120 installed inside of the main body 110 or on a surface of the main body 110 and configured to heat the sagger 10 to a set temperature so as to supply an amount of heat to the surroundings of the sagger 10.

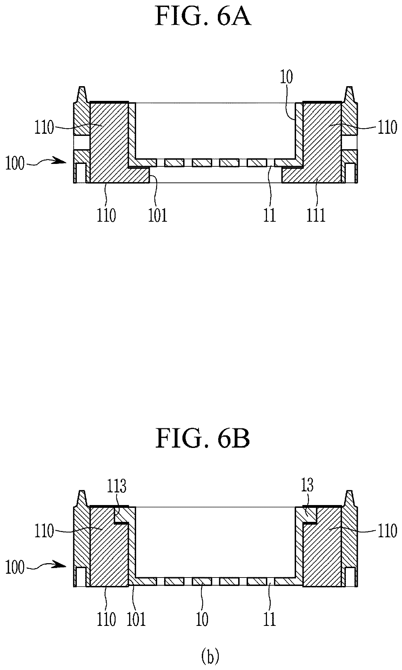

A form in which the sagger 10 is received and fixed in the receiving space of the main body 110 may have a catching projection 111 disposed to an outside of the opening 101 of the main body 110 so that the sagger 10 may be received and rested on the main body, as illustrated in FIG. 6A.

Further, as shown in FIG. 6(b), a catching groove 113 may be provided in an upper end portion of the main body 110, and a catching protrusion 13 may be provided extending outwardly from an upper end portion of the sagger 10 to catch the catching groove 113.

Depending on these forms of accommodation and fixation of the main body 110 and the sagger 10, a sealing position based on self-weight may vary.

The heater 120 is illustrated in FIGS. 2 and 3 as being embedded within the interior of the main body 110, but is not limited thereto and may of course be installed on one side surface of the main body 110.

The unit firing furnace 100 may be installed on an outer side surface of the main body 110 and may include a heat insulator 130 that retains heat generated from the heater 120.

In addition, the unit firing furnace 100 may include a case 140 that is installed on an outer side surface of the heat insulator 130 and encloses and covers the outer surface of the heat insulator 130.

In this case, the casing 140 may be formed in a " 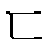 " shape or the like to enclose an upper surface, a lower surface, and the outer side surface of the heat insulator 130.

A support structure (not illustrated) for supporting the main body 110, and the heat insulator 130, may be installed on the outer side surface of the case 140 so as to protrude in an outward direction of the case 140.

In addition, a sealant 160 may be installed on an upper end surface of the casing 140 to prevent gas leakage between one unit firing furnace 100 and another neighboring unit firing furnace 100.

A power controller (not illustrated) for controlling power of the heater 120 may be embedded in the interior of the main body 110.

A temperature sensor (not illustrated) for measuring an internal temperature of the main body 110 and a transmission device (not illustrated) for transmitting a measurement value measured by the temperature sensor to the outside may be installed on the main body 110.

On an outer side of the unit firing furnace 100, a lower stopper structure 200 may be installed for supporting the unit firing furnace 100 positioned at an upper end portion of the lowermost unit firing furnace 100 of the plurality of unit firing furnaces 100.

In addition, a lower support structure 300 may be installed in a lower portion of the lowermost unit firing furnace 100 of the plurality of unit firing furnaces 100 for supporting the entire plurality of unit firing furnaces 100 of the vertical type apparatus for firing the cathode material in normal operation.

That is, a lower driving unit (not illustrated) may be installed on the lower support structure 300 that is capable of moving upward and downward within by a height that is set based on an upper charging and a lower discharging of the unit firing furnace 100 while supporting the weight of the unit firing furnace 100 as many as the total number of units to be stacked.

A lower sealant 161 may be installed between an upper end of the lower support structure 300 and a lower end of the unit firing furnace 100 positioned at the lowermost of the plurality of unit firing furnaces 100 to prevent gas leakage.

An upper gas exhaust structure 400 may be installed on an upper portion of the uppermost unit firing furnace 100 of the plurality of unit firing furnaces 100, which captures an exhaust gas discharged to the upper portion of the uppermost unit firing furnace 100 and discharges the exhaust gas to the outside.

In addition, the upper gas exhaust structure 400 may be provided with an upper driving unit (not illustrated) to open the upper gas exhaust structure 400 during charging of a new unit firing furnace 100 on top of the uppermost unit firing furnace 100 from an upper portion of the uppermost unit firing furnace 100 of the plurality of unit firing furnaces 100.

A lower gas supply structure 500 may be installed at a lower portion of the lowermost unit firing furnace 100 of the plurality of unit firing furnaces 100 to supply gas to the lowermost unit firing furnace 100.

In addition, the lower gas supply structure 500 may be integrally configured with the lower support structure 300.

That is, the lower gas supply structure may be communicatively connected to the lower support structure 300 on one side surface of the lower support structure 300.

The lower stopper structure 200 is a structure for supporting the remaining unit firing furnaces 100 while discharging the lowermost unit firing furnace 100 of the plurality of unit firing furnaces 100 into the lower portion, and may be installed to be in conjunction with the lower support structure 300 installed at the lower portion of the lowermost unit firing furnace 100.

The vertical type apparatus for firing the cathode material may include a structure for transferring the unit firing furnace (not illustrated) that discharges the lowermost unit firing furnace 100 of the plurality of unit firing furnaces 100 into the lower portion and transfers the unit firing furnace 100 to the upper portion, and charges the unit firing furnace on top of the uppermost unit firing furnace 100 of the plurality of unit firing furnaces 100.

In addition, the vertical type apparatus for firing the cathode material may include a cathode material collecting and charging device 600 that collects the cathode material 20 after firing that is loaded into the sagger 10 inside the lowermost unit firing furnace 100 of the plurality of unit firing furnaces 100, and charges the cathode material 20 to be newly fired.

Hereinafter, with reference to FIGS. 1 to 6, an operation of the vertical type apparatus for firing the cathode material of the secondary battery according to an embodiment of the present disclosure will be described.

First, the unit firing furnace 100 is plurally provided and stacked in multiple layers in the vertical direction (y-direction in FIG. 3), and the sagger 10 loaded with the cathode material 20 is received inside each unit firing furnace 100.

Additionally, the unit firing furnace 100 may be charged to the upper portion and transferred to the lower portion and discharged to the lower portion, or charged to the lower portion and transferred upward and discharged to the upper portion.

Here, for convenience of explanation, a case where the unit firing furnace 100 is charged to the upper portion and transferred to the lower portion and discharged to the lower portion will be described as an example, but the same method (principle) may be applied to a case where the unit firing furnace 100 is charged to the lower portion and transferred to the upper portion and discharged to the upper portion.

The case where the unit firing furnace 100 is charged to the upper portion and transferred to the lower portion and discharged to the lower portion refers to the case where the cathode material 20 is charged to the upper portion of the vertical type apparatus for firing the cathode material and discharged to the lower portion, and the gas is supplied to the lower portion of the vertical type apparatus for firing the cathode material and discharged to the upper portion for forming the gas atmosphere of the unit firing furnace 100.

Further, the plurality of unit firing furnaces 100 may be divided into a temperature increasing section for the uppermost unit firing furnace 100 , a cooling section for the lowermost unit firing furnace 100 , and a temperature maintaining section for the unit firing furnaces 100 between the uppermost unit firing furnace 100 and the lowermost unit firing furnace 100.

While the unit firing furnace 100 is charged to the upper portion and transferred to the lower portion and discharged to the lower portion, the temperature is adjusted through the heater 120 installed inside the unit firing furnace 100 according to the set temperature profile, so that the cathode material 20 charged to the sagger 10 proceeds with the firing reaction at the set temperature profile.

Further, the temperature control of the unit firing furnace 100 will be described below.

When the set temperature is determined from the temperature profile based on the vertical position of the unit firing furnace 100, the heater 120 installed in the interior of the unit firing furnace 10 [precisely, the interior or surface of the refractory material of the main body 110 surrounding the sagger 10] is heated to provide the required amount of heat to reach the set temperature.

Whether the set temperature is reached is detected by a temperature sensor (not illustrated) installed inside the unit firing furnace 100.

In this case, the power for the heater 120 is supplied from the outside of the unit firing furnace 100, which may be supplied in a contact or non-contact manner from a power supply busbar (not illustrated) positioned vertically on the side surface of the vertical type apparatus for firing the cathode material, through a collector (not illustrated) installed on the side surface of the main body 110 of the unit firing furnace 100.

The internal temperature of the unit firing furnace 100 detected by the temperature sensor is wirelessly or wiredly monitored, and the unit firing furnace 100 is controlled by calculating whether the heater 120 is operating and the amount of power required accordingly.

Depending on the overall size of the vertical type apparatus for firing the cathode material, and accordingly the size of the unit firing furnace 100, either the controller of the heater 120 may be installed inside the main body 110 of the unit firing furnace 100 and control the amount of power from the outside of the unit firing furnace 100, or the controller of the heater 120 may be installed outside the unit firing furnace 100 and supply as much power as the heater 120 requires.

In addition, the flow control of the unit firing furnace 100 will be described below.

The gas (air or oxygen or other gases determined by the type of cathode material) supplied to the vertical type apparatus for firing the cathode material is basically supplied through the lower gas supply structure 500 at the lower portion of the lowermost unit firing furnace 100, through a through-slit 11 in the bottom surface of the sagger 10 of the lowermost unit firing furnace 100.

The gas supplied to the interior of the sagger 10 passes around the cathode material 20 charged to the interior of the sagger 10 and supplies the gas (oxygen) required for the firing reaction of the cathode material 20, and the exhaust gas generated during the reaction process is driven upward so that the firing reaction proceeds smoothly.

The gas that has passed through the interior of the sagger 10 passes through the lower portion of the unit firing furnace 100, which is located immediately above the upper portion of the unit firing furnace 100 receiving the sagger 10, and through the slit 11 of the sagger 10 received in the unit firing furnace 100, and subsequently moves to the upper portion one after another, thus serving to supply the gas necessary for the reaction of the vertically stacked cathode materials 20, and to discharge the gas generated from the reaction to the upper portion.

The sealing between the upwardly and downwardly stacked unit firing furnaces 100 is achieved by the sealant 160 installed on the outer periphery of the surface of the upper portion of the unit firing furnace 10 being pressed by the self-weight of the unit firing furnace 100, the sagger 10, and the cathode material 20 located at the upper end of the sealant 160.

Compared to the conventional integral vertical firing furnace, in which a flow loss occurs due to the space between the sagger and the inner wall and the sagger window for insertion of the stopper, when the unit firing furnace 100 according to the present disclosure is utilized, the sagger is closely in contact with the unit firing furnace 100 by the self-weight of the sagger 10 and the cathode material 20, and the basic flow blocking function is achieved.

Therefore, the gas flow passes mostly through the slit 11 on the bottom surface of the sagger 10 to the interior of the sagger 10, i.e., around the cathode material 20 loaded into the sagger 10, thereby smoothly proceeding the firing reaction of the cathode material 20.

Hereinafter, with reference to FIG. 5, an operation process of the vertical type apparatus for firing the cathode material of the secondary battery according to an embodiment of the present disclosure will be described.

In the operation state (stationary state) of the vertical type apparatus for firing the cathode material in FIG. 5A, the upper gas exhaust structure 40 covers the upper portion of the uppermost unit firing furnace 100 of the plurality of unit firing furnaces 100, and the lower support structure 300 is closely attached to the lower end of the lowermost unit firing furnace 100 of the plurality of unit firing furnaces 100.

In this case, the gas is supplied from the lower gas supply structure 500 to the slit 11 on the bottom surface of the sagger 10 received in the lowermost unit firing furnace 100, and the gas discharged from the uppermost unit firing furnace 100 is discharged to the outside of the unit firing furnace 100 through the upper gas exhaust structure 400.

Further, in order to collect the cathode material after firing in the sagger 10 of the lowest unit firing furnace 100 and to charge the new cathode material before firing, a lower stopper structure 200 is utilized to support the unit firing furnace 100 located directly above the lowest unit firing furnace 100, as illustrated in FIG. 5B.

In this state, the lower support structure 300, which is supporting the lowermost unit firing furnace 100, moves to the lower portion by a set distance as indicated by the arrow.

Then, as illustrated in FIG. 5C, the lowermost unit firing furnace 100 supported by the lower support structure 300 is pushed by a lower pusher (not illustrated) in the right direction (x-direction in FIG. 5) as indicated by the lower right arrow, and then the cathode material 20 after firing in the sagger 10 received in the lowermost unit firing furnace 100 is collected.

In this case, the upper gas exhaust structure 400 is moved to the upper portion for charging the unit firing furnace 100 charged with the cathode material 20 to be fired.

Then, after the cathode material 20 after firing in the sagger 10 is collected, the cathode material 20 to be fired is charged in the sagger 10.

As described above, when the cathode material 20 to be fired is charged in the sagger 10, the unit firing furnace 100 in which the cathode material 20 to be fired is charged is moved to the uppermost right side of the plurality of unit firing furnaces 100 using a moving device (not illustrated), as indicated by the vertical upward arrow in FIG. 5C.

Further, the unit firing furnace 100 charged with the cathode material 20 to be fired is pushed by an upper pusher (not illustrated) in the left direction (-x-direction in FIG. 5) as indicated by the upper left arrow to locate the unit firing furnace 100 charged with the cathode material 20 to be fired to the uppermost unit firing furnace 100 of the plurality of unit firing furnaces 100, as illustrated in FIG. 5D.

As described above, when the unit firing furnace 100 charged with the cathode material 20 to be fired is located at the uppermost of the plurality of unit firing furnaces 100, the unit firing furnace 100 located at the upper end of the unit firing furnace 10, which was the lowermost of the plurality of unit firing furnaces 100 prior to the collection of the cathode material 20, becomes the lowermost unit firing furnace 100 of the plurality of unit firing furnaces 100.

Furthermore, when the unit firing furnace 100 charged with the cathode material 20 to be fired is located at the uppermost unit firing furnace 100 of the plurality of unit firing furnaces 100, the upper gas exhaust structure 400 is moved downwardly to the upper end of the uppermost unit firing furnace 100.

Furthermore, the lower support structure 300 is moved upwardly to the lower end of the lowermost unit firing furnace 100 of the plurality of unit firing furnaces 100, such that the lower support structure 300 is closely attached to the lower end of the lowermost unit firing furnace 100 of the plurality of unit firing furnaces 100, as illustrated in FIG. 5D.

In this state, as illustrated in FIG. 5E, when the lower stopper structure 200 located in the lowermost unit firing furnace 100 of the plurality of unit firing furnaces 100 is moved to an original position, the entire plurality of unit firing furnaces 100 is supported by the lower support structure 300.

In this case, when the lower support structure 300 is moved downwardly to an original position, the entire plurality of unit firing furnaces 100 is moved to the lower portion and returned to the original operating state.

While the present disclosure has been described with reference to the aforementioned exemplary embodiments, the person skilled in the art will easily understand that the present invention is not limited to the disclosed exemplary embodiments, but can be variously corrected and modified without departing from the scope of the appended claims.

### [Description of Reference Numerals]

10: Sagger
20: Cathode material
100: Unit firing furnace
110: Main body
120: Heater
130: Heat insulating material
200: Lower stopper structure
300: Lower support structure
400: Upper portion gas exhaust structure
500: Lower portion gas supply structure

## Claims

1. A vertical type apparatus for firing a cathode material of a secondary battery that fires the cathode material by moving the cathode material in a vertical direction, the vertical type apparatus comprising:
a plurality of saggers, each having an open upper portion, provided with a through-slit for gas flow in a lower surface thereof, and loaded with the cathode material therein; and
a plurality of unit firing furnaces, each having an open upper portion, each plurally stacked in the vertical direction, each receiving the respective sagger, and configured to move in a direction opposite to the gas flow.

2. The vertical type apparatus for firing a cathode material of a secondary battery of claim 1,
wherein the unit firing furnace comprises:
a main body made of a refractory material, provided with an opening for the gas flow on a lower surface thereof and having a receiving space in which each of the saggers is received; and
a heater installed on one surface of the main body or inside thereof and configured to heat the sagger.

3. The vertical type apparatus for firing a cathode material of a secondary battery of claim 2, wherein
a heat insulator is installed on an outer surface of the main body to retain heat generated by the heater.

4. The vertical type apparatus for firing a cathode material of a secondary battery of claim 3, wherein
a case is installed on an outer surface of the heat insulator to cover the outer surface of the heat insulator.

5. The vertical type apparatus for firing a cathode material of a secondary battery of claim 4, wherein
a support structure is installed on an outer surface of the case to support the main body and the heat insulator.

6. The vertical type apparatus for firing a cathode material of a secondary battery of claim 4, wherein
a sealant is installed on an upper end surface of the case to prevent gas leakage between the unit firing furnace and other neighboring unit firing furnaces.

7. The vertical type apparatus for firing a cathode material of a secondary battery of claim 1, wherein
a temperature sensor configured to measure an internal temperature of the main body and a transmission device configured to transmit a measurement value measured by the temperature sensor to the outside, are installed in the main body.

8. The vertical type apparatus for firing a cathode material of a secondary battery of any one of claim 1 to claim 7, wherein
a lower stopper structure is installed on an outer side of the unit firing furnace and configured to support the unit firing furnace located at an upper end of a lowermost unit firing furnace of the plurality of unit firing furnaces.

9. The vertical type apparatus for firing a cathode material of a secondary battery of claim 8, wherein
a lower support structure is installed in a lower portion of the lowermost unit firing furnace of the plurality of unit firing furnaces and configured to support an entire lower portion of the plurality of unit firing furnaces.

10. The vertical type apparatus for firing a cathode material of a secondary battery of claim 8, wherein
a gas exhaust structure is installed in an upper portion of an uppermost unit firing furnace of the plurality of unit firing furnaces and configured to capture an exhaust gas and discharge the exhaust gas to the outside.

11. The vertical type apparatus for firing a cathode material of a secondary battery of claim 10, wherein
a gas supply structure is installed in a lower portion of the lowermost unit firing furnace of the plurality of unit firing furnaces and configured to supply gas.

12. The vertical type apparatus for firing a cathode material of a secondary battery of claim 11, wherein
a cathode material to be fired is charged to the sagger received in the uppermost unit firing furnace of the plurality of unit firing furnaces, and
wherein the cathode material after firing is discharged from the sagger received in the lowermost unit firing furnace of the plurality of unit firing furnaces.

13. The vertical type apparatus for firing a cathode material of a secondary battery of claim 12, comprising:
a cathode material collecting and charging device configured to collect the cathode material after firing loaded into the sagger inside the lowermost unit firing furnace of the plurality of unit firing furnaces, and to charge the cathode material to be newly fired.

14. The vertical type apparatus for firing a cathode material of a secondary battery of claim 1, wherein
a catching projection is provided at a bottom surface of the main body, and wherein the sagger is received and rests on the catching projection.

15. The vertical type apparatus for firing a cathode material of a secondary battery of claim 1, wherein
a catching groove is disposed in an upper end of the main body, and
a catching protrusion is disposed on an outer side of an upper end of the sagger and configured to be caught in the catching groove.
